# EUROPÄISCHE PATENTANMELDUNG

(11) **EP 1 862 208 A1**
(43) Veröffentlichungstag der Anmeldung: **05.12.2007**
(21) Anmeldenummer: 06022428.4
(22) Anmeldetag: 26.10.2006
(51) Int. Cl.: B01D 39/16, B01D 39/20, D03D 15/00, D04H 1/46, D04H 1/48

(54) **Basaltfasern enthaltendes Filtermedium**

(71) Anmelder: A. Kayser GmbH u. Co.KG Textile Filtermedien, 37574 Einbeck (DE)
(72) Erfinder: Ammermann, Stephan, 37083 Göttingen (DE)
(74) Vertreter: Müller-Boré & Partner Patentanwälte

(57) **Zusammenfassung**

Die vorliegende Erfindung betrifft ein Filtermedium, welches ein Basaltfasern enthaltendes Stützgewebe umfasst, wobei mindestens eine Seite des Stützgewebes mit Stapelfasern belegt ist, ein Verfahren zu dessen Herstellung sowie die Verwendung des erfindungsgemäßen Filtermediums zur partikulären Heißgasreinigung.

## Beschreibung

Die vorliegende Erfindung betrifft ein Filtermedium, welches ein Basaltfasern enthaltendes Stützgewebe umfasst, wobei mindestens eine Seite des Stützgewebes mit Stapelfasern belegt ist, ein Verfahren zu dessen Herstellung sowie die Verwendung des erfindungsgemäßen Filtermediums zur partikulären Heißgasreinigung.

Bei der industriellen Abgasreinigung kommt neben der Abscheidung gas- und dampfförmiger Verunreinigungen insbesondere der Abscheidung partikelförmiger Verunreinigung eine wichtige Bedeutung zu. Dies erfolgt im Wesentlichen durch Massenkraftabscheidungsverfahren, Nassabscheidungsverfahren, elektrische Abscheidungsverfahren oder filternde Abscheidungsverfahren. Insbesondere in industriellen Anlagen werden häufig Schlauchfilteranlagen verwendet, die ein geeignetes Filtermedium umfassen, wobei das während des Betriebs mit den partikelförmigen Verunreinigungen beladene Filtermedium zur Regeneration regelmäßig abgereinigt wird. Diese Abreinigung erfolgt üblicherweise durch mechanische Verfahren, wie beispielsweise Rütteln, Vibrieren oder Klopfen, oder pneumatische Verfahren, beispielsweise durch Anwendung eines Druckluftimpulses oder Rückspülung.

Als Filtermedien werden neben Filzen und Vliesen im Wesentlichen Filtergewebe, insbesondere auf Basis von Polytetrafluorethylen-Fasern (PTFE-Fasern), verwendet. Derartige Fasergewebe weisen zwar eine hohe Beständigkeit gegen alkalische und saure Komponenten im Abgas sowie eine hohe Temperaturbestandigkeit auf. Jedoch sind PTFE-Fasern vergleichsweise teuer. Daher wurde im Stand der Technik die Verwendung von kostengünstigeren Glasfasern an Stelle von PTFE-Fasern vorgeschlagen. EP-A-0 962 243 offenbart beispielsweise ein Filtermedium, welches ein Filtergewebe aus Glasfasern umfasst, wobei das Filtergewebe mit Stapelfasern belegt ist. Glasfasern weisen zwar eine hohe mechanische Belastbarkeit auf, jedoch ist die Zugfestigkeit in feuchten Gasen sowie bei hohen Temperaturen geringer als bei Basaltfasern. Daher sind Filtergewebe auf Glasfaser-Basis nicht optimal für die Verwendung beispielsweise in Schlauchfilteranlagen für die partikuläre Heißgasreinigung. Ferner haben Glasfasern eine vergleichsweise hohe Wasseraufnahmekapazität. Um eine ausreichende Beständigkeit gegen Wasser bereitzustellen, müssen Glasfasern daher zunächst grundhydrophilisiert werden, was einen zusätzlichen Verfahrensschritt und somit eine kosten- und zeitsteigernde Maßnahme in der Herstellung eines Stützgewebes auf Glasfaser-Basis darstellt.

Der vorliegenden Erfindung liegt daher die Aufgabe zugrunde, ein Filtermedium, welches kostengünstig ist, eine hohe Beständigkeit gegen alkalische und saure Komponenten in dem Abgas sowie eine hohe Temperaturbestandigkeit aufweist, und damit für die partikuläre Heißgasreinigung geeignet ist, bereitzustellen.

Diese Aufgabe wird durch die in den Ansprüchen gekennzeichneten Ausführungsformen gelöst.

Insbesondere wird ein Filtermedium bereitgestellt, welches ein Basaltfasern enthaltendes Stützgewebe umfasst, wobei das Stützgewebe ein Flächengewicht von nicht mehr als etwa 350 g/m² aufweist, wobei mindestens eine Seite des Stützgewebes mit Stapelfasern belegt ist, die einen Titer von etwa 0,6 bis etwa 60 dtex und eine Schnittlänge von mindestens etwa 20 mm aufweisen, und wobei der Anteil der Stapelfasern am Gesamtgewicht des Filtermediums mindestens etwa 40% beträgt.

Im Rahmen der vorliegenden Erfindung wird unter dem Begriff "Filtermedium" ein Filter verstanden, der befähigt ist, teilchenförmige bzw. partikuläre Verunreinigungen aus einem im Wesentlichen gasförmigen Strom zu entfernen. Ein solches Filtermedium kann in industriellen Abgasreinigungsanlagen enthalten sein und beispielsweise Bestandteil einer Schlauchfilteranlage sein. Das erfindungsgemäße Filtermedium kann jedoch ebenso in nicht-industriellen Abgasreinigungsanlagen verwendet werden.

Unter dem Begriff "Basaltfaser" wird im Rahmen der vorliegenden Erfindung eine feine Mineralfaser aus Basalt verstanden. Basaltfasern sind beispielsweise im Handel erhältlich und können in ihrer Zusammensetzung in Abhängigkeit vom Hersteller leicht variieren. Üblicherweise werden Basaltfasern aus einer flüssigen Basaltschmelze bei etwa 1400°C hergestellt und sind im Gegensatz zu Kohlenstoff- und Kunststofffasern nicht verstreckbar, sondern sind ähnlich den Glasfasern amorph. Die wesentlichen Komponenten von Basaltfasern sind SiO₂, Al₂O₃, CaO, MgO, Na₂O, K₂O und Fe₂O₃.

Das erfindungsgemäße Filtermedium umfasst ein Basaltfasern enthaltendes Stützgewebe. In einer bevorzugten Ausführungsform besteht das Stützgewebe im Wesentlichen vollständig aus Basaltfasern. Es ist aber auch möglich, dass das Stützgewebe neben den Basaltfasern als Hauptkomponente noch andere geeignete Komponenten bzw. Fasern enthält.

Das Stützgewebe weist ein Flächengewicht von nicht mehr als etwa 350 g/m², beispielsweise von etwa 300 g/m² bis etwa 350 g/m² auf.

Die Dicke des Stützgewebes beträgt vorzugsweise mindestens etwa 0,4 mm, besonders bevorzugt mindestens etwa 0,5 mm.

Damit das erfindungsgemäße Filtermedium eine hohe Filterwirkung aufweisen kann, ist mindestens eine Seite des Stützgewebes mit Stapelfasern belegt. Die Stapelfasern sind durch Vernadelung mit dem Stützgewebe verbunden. In einer bevorzugten Ausführungsform der vorliegenden Erfindung sind sowohl die Oberseite als auch die Unterseite des Stützgewebes mit Stapelfasern belegt. Dabei können beide Seiten mit der gleichen Sorte Stapelfasern oder aber mit verschiedenen Sorten Stapelfasern belegt sein. Ferner kann jede der beiden Seiten unabhängig voneinander eine oder mehrere verschiedene Sorten Stapelfasern enthalten.

Die Stapelfasern des erfindungsgemäßen Filtermediums können aus jedem geeigneten Material aufgebaut sein. Vorzugsweise umfasst das Filtermedium Stapelfasern aus Polyimid (PI), Polyphenylensulfid (PPS), meta-Aramid, Polytetrafluorethylen (PTFE), Polyacrylnitril oder ein Gemisch aus mindestens zwei verschiedenen Sorten der vorstehend genannten Stapelfasern. So kann das Filtermedium beispielsweise entweder Stapelfasern aus Polyimid oder Stapelfasern aus Polyphenylensulfid, oder aber sowohl Stapelfasern aus Polyimid als auch Stapelfasern aus Polyphenylensulfid aufweisen.

In einer bevorzugten Ausführungsform umfasst das Filtermedium etwa 10 bis etwa 50 Gew.-%, bezogen auf das Gesamtgewicht der Stapelfasern, an Basaltfasern als Stapelfasern.

Insbesondere Polyimid als Hauptbestandteil von Stapelfasern zeigt eine sehr gute chemische Beständigkeit. Es kann jedoch bei hoher alkalischer Feuchte sowie bei Anwesenheit von Stickoxiden im Gas angegriffen werden. Dies hat einen negativen Einfluss auf die Haltbarkeit von Filtermedien, die ausschließlich aus Polyimid aufgebaut sind. Durch Beimischung von Basaltfasern zu den Polyimid-Stapelfasern ist es möglich, die Haltbarkeit des erfindungsgemäßen Filtermediums deutlich zu erhöhen und damit die Standzeiterwartung des Filtermediums zu verlängern. Daneben ist mit der Beimischung von Basaltfasern zu dem Stapelfaser-Material ein erheblicher Preisvorteil verbunden, da bei herkömmlichen Verfahren die vergleichsweise teuren PTFE-Fasern zugemischt werden, um die chemische Beständigkeit des Filtermediums zu verbessern. Glasfasern können dagegen nicht verwendet werden, um als Stapelfasern beispielsweise zu Polyimid-Stapelfasern zugemischt zu werden, da Glasfasern eine sehr geringe Abrasionsbeständigkeit aufweisen und damit als Filterfasern ungeeignet sind. Folglich werden Glasfasern üblicherweise in der Filtrationstechnik nur für Stützgewebe und nicht als Stapelfasern verwendet.

In einer besonders bevorzugten Ausführungsform umfassen die Stapelfasern des erfindungsgemäßen Filtermediums Stapelfasern aus Polyimid (PI), Polyphenylensulfid (PPS) und etwa 10 bis etwa 50 Gew.-% Basaltfasern, bezogen auf das Gesamtgewicht der Stapelfasern.

Die im erfindungsgemäßen Filtermedium enthaltenen Stapelfasern weisen einen Titer von etwa 0,6 bis etwa 60 dtex, vorzugsweise von etwa 1 bis etwa 6 dtex auf. Ferner weisen die Stapelfasern eine Schnittlänge von mindestens etwa 20 mm, vorzugsweise von mindestens etwa 30 mm und besonders bevorzugt von etwa 38 bis etwa 80 mm auf.

Um eine ausreichende Filterwirkung des Filtermediums sicherzustellen, beträgt der Anteil der Stapelfasern am Gesamtgewicht des Filtermediums mindestens etwa 40%, vorzugsweise mindestens etwa 50%, besonders bevorzugt mindestens etwa 60%. Dieser Anteil ist nach Wärmebehandlung des Filtermediums bei mindestens etwa 150°C gemessen.

Ferner betrifft die vorliegende Erfindung ein Verfahren zur Herstellung eines Filtermediums, welches die Schritte des Bereitstellens eines Basaltfasern enthaltenden Stützgewebes, wobei das Stützgewebe ein Flächengewicht von nicht mehr als etwa 350 g/m² aufweist, des Belegens mindestens einer Seite des Stützgewebes mit Stapelfasern, die einen Titer von etwa 0,6 bis etwa 60 dtex und eine Schnittlänge von mindestens etwa 20 mm aufweisen, des Verbindens der Stapelfasern mit dem Stützgewebe durch Vernadelung, und des Wärmebehandelns des Filtermediums bei einer Temperatur von mindestens etwa 150°C umfasst, wobei der Anteil der Stapelfasern am Gesamtgewicht des Filtermediums mindestens etwa 40% beträgt.

Die abschließende Wärmebehandlung des Filtermediums bei einer Temperatur von mindestens etwa 150°C bewirkt eine Stabilisierung des Filtermediums aufgrund der mit der Wärmebehandlung verbundenen Schrumpfung der Stapelfasern.

Ferner kann das erfindungsgemäße Filtermedium in einem Verfahren zur partikulären Heißgasreinigung verwendet werden.

Das erfindungsgemäße Filtermedium kann beispielsweise in Schlauchfilteranlagen für die partikuläre Heißgasreinigung, zum Beispiel in Kohlekraftwerken, eingesetzt werden. Die dabei verwendeten Schlauchfilter gehören zu der Gruppe der Abreinigungsfilter, bei denen nach Erreichen eines definierten maximalen Druckverlustes über dem Schlauchfilter oder nach Erreichen einer definierten Zeit der Staub im Wesentlichen vollständig aus dem Schlauchfilter entfernt wird. Die Abreinigung des Schauchfilters erfolgt vorzugsweise durch einen Druckluftimpuls, wobei der Druck des Druckluftimpulses bis zu 8 bar betragen kann. Dabei bläht sich der Schlauchfilter auf und der Staub wird von dem Filtermedium abgesprengt. Das Stützgewebe hat in diesem Fall eine stützende Wirkung auf das Filtermedium. Eine Grundvoraussetzung für eine lange Einsatzfähigkeit des Filtermediums sind daher sehr gute Zugfestigkeitswerte der das Stützgewebe aufbauenden Fasern.

Unter dem Einfluss von Feuchtigkeit des Gases sowie bei hohen Temperaturen zeigen Basaltfasern im Vergleich zu den im Stand der Technik verwendeten Glasfasern eine geringere zeitliche Änderung ihrer Zugfestigkeitswerte.

Ein weiterer Vorteil des erfindungsgemäßen Filtermediums liegt in der höheren Beständigkeit der Basaltfasern gegenüber Wasser sowie der geringeren Wasseraufnahmekapazität im Vergleich zu Glasfasern. Damit ist in der Herstellung des erfindungsgemäßen Filtermediums nicht der Verfahrensschritt der Grundhydrophilisierung der Fasern notwendig, der bei der Herstellung eines Filtermediums auf Glasfaser-Basis üblicherweise durchgeführt werden muss.

Außerdem weist das erfindungsgemäße Filtermedium eine höhere Weiterreißfestigkeit und folglich eine geringere Neigung zur Versprödung der Basaltfasern und somit eine geringere Neigung zu Faserbrüchen auf.

Ferner weist die Verwendung von Basaltfasern im Vergleich zu Glasfasern den Vorteil auf, ohne weitere Zusätze verarbeitbar zu sein und vollständig auf der Produktionsanlage rezyklierbar zu sein. Darüber hinaus ist die Erzeugung von Basaltfasern im Vergleich zur Erzeugung zu Glasfasern insgesamt weniger energieintensiv.

Die vorliegende Erfindung soll im Folgenden anhand eines Beispiels näher erläutert werden, ohne jedoch durch dieses beschränkt zu sein.

### Beispiel:

Es wurde ein erfindungsgemäßes Filtermedium auf Basaltfaser-Basis gemäß den in Tabelle 1 dargestellten Spezifikationen hergestellt und mit einem herkömmlichen Filtermedium auf Glasfaser-Basis verglichen.

**Tabelle 1:**

| Messgröße | Erfindungsgemäßes Filtermedium | Vergleichsfiltermedium |
|---|---|---|
| Flächengewicht [g/m²] | 756 | 770 |
| Luftdurchlässigkeit [l/dm²/min] | 140 | 227 |
| Dicke [mm] | 3,2 | 1,7 |
| Höchstzugkraft (längs/quer) [daN/5cm] | 105/115 | 160/155 |
| Dehnung (längs/quer) [%] | 4/4 | 6/6 |
| Weiterreißkraft (längs/quer) [N] | 161/117 | 156/97 |
| Material Stapelfasern/Gewebe | Pl 2,2 dtex / Basalt | Pl 2,2 dtex / Glas |
| Schnittlänge der Stapelfasern [mm] | 60 | n.b. |
| Flächengewicht des Gewebes [g/m²] | 342 | > 400 |
| Behandlung des Filtermediums | thermofixiert bei 290°C, einseitig gesengt | thermofixiert, einseitig gesengt, PTFE-beschichtet |

| | | |
|---|---|---|
| n.b.: nicht bestimmt | | |

Aus Tabelle 1 ist ersichtlich, dass die Flächengewichte des erfindungsgemäßen Filtermediums auf Basalt-Basis sowie des Vergleichsfiltermediums auf Glasfaser-Basis vergleichbar sind. Jedoch belegt die höhere Weiterreißfestigkeit des erfindungsgemäßen Filtermediums eine geringere Neigung zur Versprödung der Basaltfasern und somit eine geringere Neigung zu Faserbrüchen.

Außerdem weist das erfindungsgemäße Filtermediums eine Luftdurchlässigkeit von nur 140 l/dm²/min. Dies ist insbesondere für Anwendungen, bei denen eine hohe Staubabscheideleistung sichergestellt sein muss (beispielsweise in der Kraftwerkstechnik), vorteilhaft, da entsprechende Filtermedien eine Luftdurchlässigkeit von nicht mehr als 200 l/dm²/min aufweisen sollten. Im Gegensatz dazu weist das Vergleichsmedium eine höhere Luftdurchlässigkeit auf.

## Patentansprüche

1. Filtermedium, welches ein Basaltfasern enthaltendes Stützgewebe umfasst, wobei das Stützgewebe ein Flächengewicht von nicht mehr als 350 g/m² aufweist, wobei mindestens eine Seite des Stützgewebes mit Stapelfasern belegt ist, die einen Titer von 0,6 bis 60 dtex und eine Schnittlänge von mindestens 20 mm aufweisen, und wobei der Anteil der Stapelfasern am Gesamtgewicht des Filtermediums mindestens 40% beträgt.

2. Filtermedium nach Anspruch 1, wobei das Filtermedium Stapelfasern aus Polyimid (Pl), Polyphenylensulfid (PPS), meta-Aramid, Polytetrafluorethylen (PTFE), Polyacrylnitril oder ein Gemisch davon umfasst.

3. Filtermedium nach Anspruch 1 oder 2, wobei das Filtermedium 10 bis 50 Gew.-%, bezogen auf das Gesamtgewicht der Stapelfasern, an Basaltfasern als Stapelfasern umfasst.

4. Verfahren zur Herstellung eines Filtermediums, welches die Schritte
des Bereitstellens eines Basaltfasern enthaltenden Stützgewebes, wobei das Stützgewebe ein Flächengewicht von nicht mehr als 350 g/m² aufweist,
des Belegens mindestens einer Seite des Stützgewebes mit Stapelfasern, die einen Titer von 0,6 bis 60 dtex und eine Schnittlänge von mindestens 20 mm aufweisen,
des Verbindens der Stapelfasern mit dem Stützgewebe durch Vernadelung, und
des Wärmebehandelns des Filtermediums bei einer Temperatur von mindestens 150°C umfasst,
wobei der Anteil der Stapelfasern am Gesamtgewicht des Filtermediums mindestens 40% beträgt.

5. Verwendung des Filtermediums nach einem der Ansprüche 1 bis 3 zur partikulären Heißgasreinigung.
